# EUROPEAN PATENT APPLICATION

(11) **EP 1 455 417 A1**
(43) Date of publication of application: **08.09.2004**
(21) Application number: 03004372.3
(22) Date of filing: 03.03.2003
(51) Int. Cl.: H01R 13/514, H01R 13/516, H04Q 1/14

(54) **Functional module for assembling in a telecommunication module and installing method of the telecommunication module**

(71) Applicant: 3M Innovative Properties Company, St. Paul, Minnesota 55133-3427 (US)
(72) Inventor: Denter, Friedrich, 44575 Castrop-Rauxel (DE); Otto, Hans-Dieter, 51688 Wipperfürth (DE); Bund, Christine, 42111 Wuppertal (DE); Wurster, Peter, 42115 Wuppertal (DE); Schaub, Cornel, 42281 Wuppertal (DE)
(74) Representative: HOFFMANN - EITLE

(57) **Abstract**

A functional module (14) in the field of telecommunications has a front, a rear and four side faces, more than two first contacts and more than two second contacts, each first contact being connected with a second contact, the contacts being adapted to be connected with first and second contacts of at least one contact module (12), which further includes contacts (16) adapted to connect wires therewith, and into which contact module (12) the functional module (14) is insertable, so as to establish electrical connection between the contacts of the functional module (14) and the contacts of the contact module (12).

A telecommunications module includes at least one functional module and at least one contact module. An assembly of two or more telecommunications modules is disclosed. A kit of parts, includes at least two functional modules of a different type and at least one contact module. In a method of installing a telecommunications module, a contact module is installed firstly, where after a functional module is fitted to the contact module.

## Description

### TECHNICAL FIELD

The invention relates to a functional module in the field of telecommunications, a telecommunications module including at least one functional module, an assembly of two or more telecommunications modules, a kit of parts including at least two functional modules as well as a method of installing a telecommunications module.

### BACKGROUND

In the field of telecommunications, numerous customers are connected with the switch of telecommunications company via telecommunications lines. The customers can also be called subscribers. The switch is also called exchange. Between the subscriber and the switch, sections of the telecommunications lines are connected,with telecommunications modules. The telecommunications modules establish an electrical connection between a wire which comes in at a first side, and a wire, which extends from the telecommunications module at a second side. In the telecommunications module, disconnection points can be located in the electrical connection between the two sides. At such disconnection points, disconnection plugs can be inserted, in order to disconnect the line. Furthermore, protection plugs and magazines are known. These are connected to the module and protect any equipment connected to the wires from overcurrent and overvoltage. Finally, test plugs can be inserted at a disconnection point in order to test or monitor a line.

The described telecommunications modules can be located at any type of distribution points. A typical distribution point is the main distribution frame located in the central office of a telecommunications company. However, further distribution points are known in the art, such as distribution points outside the central office, which e.g. serve a number of streets or houses. Also office buildings or floors within buildings can have distribution points.

Recently, ADSL-technology has spread widely in the field of telecommunications. This technology allows two different signals to be transmitted by a single line. This is achieved by making use of different frequency bands, in which the different signals are transmitted. The signals are combined at a particular point in the telecommunications line. The combined signal is split at another point. After splitting the signal, the so-called POTS (plain old telephone service)-signal can be used to transmit a "normal" telephone signal. Furthermore, the "other" part of the split signal can be used to transmit data, for example. The so-called splitters, which are used to split or combine the signal, can in general be arranged in any distribution point.

It has been disclosed by WO 01/97339 A1 to incorporate a splitter into a telecommunications module. In the module according to WO 01/97339 A1, a printed circuit board carrying the necessary filters and electrical components for realising the splitter, is inserted into a first housing. A second housing, having the necessary contacts of the telecommunications module, is attached to the first housing. Generally, the printed circuit board is described to be replaceable.

DE 198 16 678 C1 describes a telecommunications module with a cavity between two rows of contacts. Plural plugs are insertable into the cavity so as to connect opposing contacts. The plugs can comprise protection components.

### SUMMARY OF THE INVENTION

The invention provides a functional module in the field of telecommunications, which allows a cost effective method of establishing and changing the technical properties of telecommunication lines. In particular any components which are much more costly than the lines and connection points as such, can be added depending on the needs. A cost effective approach for establishing and, as far as needed, changing the technical properties of a telecommunications line, is also realized by a telecommunications module comprising at least one functional module, an assembly of two or more telecommunications modules as well as a kit of parts including at least two functional modules.

The functional module in the field of telecommunications has a front, a rear and a four side faces. These will typically be formed by a housing of electrical isolating material, e.g. plastics. The functional module has more than two first contacts. Furthermore, more than two second contacts are provided. It is to be noted that any wires or cables are not directly connected with the contacts of the functional module. The contacts of the functional module are not adapted for this purpose. Rather, as will be explained in more detail below, the contacts of the functional module are adapted to be electrically connected to contacts of one or more so-called contact modules. The contact modules comprise contacts which are adapted to allow the connection of wires or cables and constitute a complete telecommunications module together with the functional module.

In the functional module, each of the first contacts is electrically connected with at least one second contact. In other words, the functional module establishes electrical connection between more than two first contacts, and more than two second contacts. A particular first contact can be associated with a single second contact. However, a first contact can also be associated with two or more second contacts. The same applies to the second contacts. This will for example be the case, when a signal transmitted to a first contact is split by the functional module, so that the split signal is further transmitted by two separate second contacts. It is to be noted, that the first and second contacts of the functional module can be arranged in rows. A first row can contain the first contacts, and a second row can contain the second contacts. However, the first and second contacts can be arranged arbitrarily. In any case, the first and second contacts differ from each other in that one type of contacts, e.g. the first contacts, receive a signal, and another type of contacts, e.g. the second contacts, transmit a signal or pass it on. Thus, the first and second contacts respectively could be called in-contacts and out-contact respectively. Furthermore, the first and second contacts do not necessarily have to be formed by separate elements. Rather, one and the same integral element can constitute a first and a second contact. In this case, the contacts will be simply connected with each other. The functional module could than be called a connection module.

As indicated above, the contacts of the functional module are adapted to be connected with first and second contacts of at least one contact module. The contact module further comprises contacts, which are adapted to connect wires or cables therewith. In other words, the contact module can compromise not more than a housing and contacts for connecting wires therewith. These contacts are suitably exposed so as to enable electrical connection with the contacts of the functional module. It can readily be understood, that the one or more contact modules are comparably inexpensive. Therefore, merely the "base" of a telecommunications module can be established at a distribution point with low costs. The wires can be connected therewith. However, associated contacts of the contact module can initially be electrically separated from each other. Electrical connection including the ability to perform certain functions is then established by combining the functional module with the contact module. As the functional module will typically comprise functional elements, such as splitter circuits, it will be costly, as compared to the contact module. Therefore, the fitting of one or more functional modules to the contact module can be delayed until a point of time, when the telecommunications line is to be completed and/or a particular function such as the splitting, is to be added to it. Therefore, by means of the refittable functional module, the invention realizes economic advantages.

In summary, a complete telecommunications module is established by fitting the functional module to the.contact module and establishing electrical connection between the first and second contacts of the functional module and the first and second contacts of the contact module.

The first contacts of the functional module can be arranged on a first side face of the functional module. The second contacts can be arranged on a second side face opposite the first side face. This structure leads to a well organized arrangement of the contacts. Furthermore, it corresponds to the general structure and appearance of strip-like telecommunications modules. This will facilitate the handling and connection work, which is to be performed on the contact module, which is to be combined with the functional module.

For the electrical connection with the contacts of the contact module, the contacts of the functional module can have any suitable shape and configuration. In particular, the contacts of the functional module can extend outside the respective side face so as to project there from. In the projecting part, the contact can substantially be hook-shaped.

Generally, a mechanical connection between the functional module and the contact module can be established by the contacts. However, the functional module can also comprise separate mechanical connection means for establishing mechanical connection between the functional module and the contact module. These connection means can e.g., be formed from the housing, in particular, the plastic materials thereof.

As regards the shape of the mechanical connection-means, any shape and configuration providing a reliable connection, is conceivable. In particular, the mechanical connection means can be hook-shaped. As an alternative, it can be mentioned that the functional module can have connection means in the form of one or more protecting tabs or similar elements, which can be inserted into the contact module. The tabs or similar elements can e.g. have a widened or thickened section, which can suitably be locked or engaged with a complementary structure of the contact module.

In a similar manner, also the contacts of the functional module can be hook-shaped. In particular, portions of the contacts extending from the housing of the functional module can have the shape of hooks. As an alternative, the contact of the functional module can project in a straight manner from the functional module. A save electrical contact and/or a mechanical connection can be realized by means of the fact that the contact can have a projection formed on the contact. E.g., one or more points can be stamped or similarly worked so as to project from the contact. By means of a suitable engagement and/or interlocking with a complementary structure of the contact module, the desired connection can be achieved.

As regards the mechanical connection in combination with the electrical connection, the extension of the hooks of the mechanical connection means and the extension of the hooks of the contacts can face a different direction. E. g., the mechanical connection means can be directed in a rear ward direction. The hooks of the contacts can be directed in a horizontal or sideways direction. When the functional module is fitted to a contact module, this structure allows a defined mechanical positioning. Any influence from the electrical connection involving the contacts is avoided.

In this context, the hooks of the mechanical connection means and the hooks of the contacts can have straight parts, from which the bent parts comprising the free ends extend. The straight parts can be substantially aligned with each other in order to render the complementary structure of the contact module, with which the functional module is to be combined, very simple. In particular, a single notch can be provided in the contact module in order to accommodate both the hook of the contact and the hook of the mechanical connection means. As regards all of the above features related to the mechanical connection means as such, their particular shape and their combination with a particular shape of the projecting contacts, it should be noted, that any of these features alone or in combination with each other can be chosen in connection with a functional module which comprises less contacts than the functional module described above. In other words, also for a functional module comprising one or two first contacts and one or two second contacts, the above-mentioned features have advantages and lead to a functional module, which is to be considered a part of the present disclosure.

As regards the functional components contained in the functional module, these can, e.g. be filters. In this manner, the electrical signal, which is transmitted from the first contacts to the second contacts, can be suitably filtered. Furthermore, plural filters and/or further electrical components can be combined, so as to create one or more splitter circuits within the functional module.

In the functional module, the electrical connection between the first and second contact can, furthermore, be provided with a test access. In particular, by means of suitable electrical connections, relays and/or switches the electrical connection towards the first and/or second side, i.e. the line leading to the subscriber and/or the line leading to the switch, can be tested. Furthermore, the entire telecommunications line can be monitored. It should be mentioned that the functional module can constitute a control module for controlling the above-described electrical connections, switching operations etc. As an alternative, a separate control module can be provided.

Moreover, the functional module can include one or more protection components. The functional module establishes electrical connection between the contacts of the contact module. Therefore, the function of protecting the wires connected with the contact module as well as any equipment, which is connected with these wires, can at least partially be integrated into the functional module. In particular, certain protection components can be provided in the functional module, whereas other protection components can be provided in a protection plug or module, which can be combined with the functional module. In this context, reference is made to the application entitled "Assembly of a Telecommunications Module and at least one Protection Plug" filed by the applicant today. The content of this application, as regards the provision of protection components both in a telecommunications module and a protection plug or module are to be considered a part of the present disclosure by means of the reference.

As regards the arrangement of any functional elements within the functional module, the functional module can include one or more printed circuit boards, on which the necessary electrical connections and electrical components are located.

Apart from the access, which is provided by means of the first and second contacts, the functional module can have one or additional access points. At such an access point, any types of plugs or modules, such as protection, test or disconnection plugs or modules can be combined with the functional module. In particular, the functional module can comprise one or more suitable openings, into which at least one of the mentioned plugs or modules can be inserted. By providing electrical access at suitable points in the electrical connection between the first and second contacts, the desired functions, such as disconnection, protection of the connected equipment as well as testing of the connected lines can be performed. It is to be noted that the possibility of combining the mentioned plugs or modules with the functional module, provides the advantage that these can remain on the functional module, whenever the functional module is removed from the contact module. In particular, in a situation, when a functional module is to be replaced by a functional module of a different type, it is advantageous to have the possibility to at first leave the plugs or modules on the functional module. The plugs or modules can then easily be inserted into a new functional module at the required places. Afterwards, the new functional module can be fitted to the contact module so as to replace the functional module, which was present before. Furthermore, the one or more openings, which can be provided in the functional module, can be adapted to allow protection components, which can be contained in the functional module, to be replaced. Thus, the one or more openings can be closable by means of one or more lids or similar components. In particular, the one or more openings can be formed adjacent to or in the vicinity of a location, where a protection component is arranged in the functional module. Thus, if such a component needs to be replaced, this can easily be performed by opening the lid and accessing the protection component.

The described access or opening for any types of plugs or modules can be formed at the front face of the functional module in order to achieve improved handling properties.

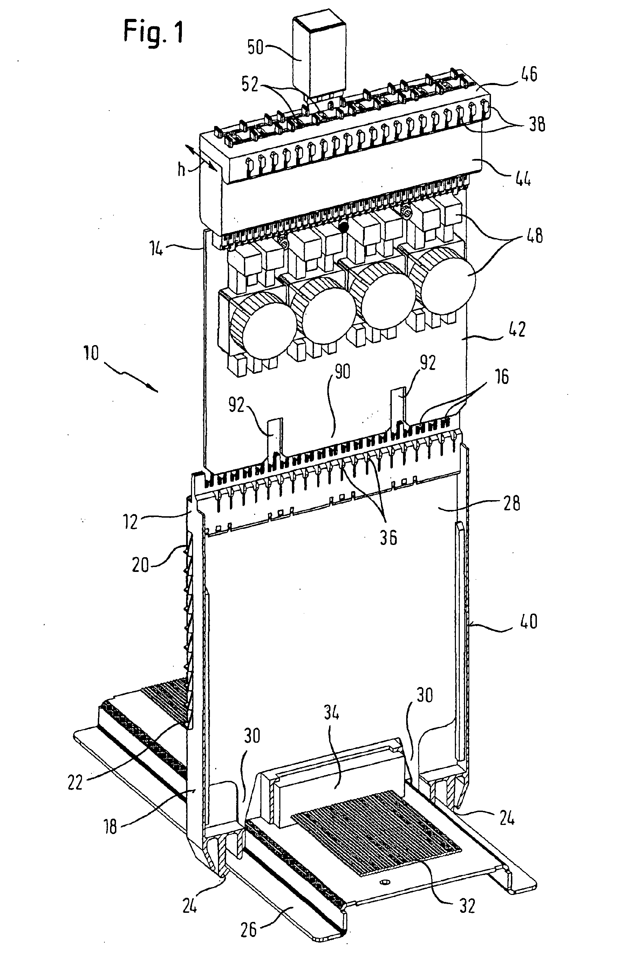

The functional module can comprise a lower housing and a upper housing. The lower housing can be the same for different types of functional modules, which are distinguished by different types of upper housings. In particular, different upper housings can be formed with different heights (h; Fig. 1) so as to be compatible with different types of components, which are accommodated in the functional module and which can be of different height. Furthermore, a specific upper housing can be provided in connection with the feature of providing access to components, such as protection components, which can be accommodated in the functional module. In particular, the upper housing can be provided with one or more openings, which can be closable by a lid.

The invention, furthermore, provides a telecommunications module, which is constituted by at least one functional module as described-above and at least one contact module. This telecommunications module can have a modular structure and allows a step by step completion of the module in accordance with the needs and the required functions. The contact module can have both sets of contacts, the first and second contacts, which can be arranged in opposite rows. Furthermore, the contact module can be configured as a substantially strip-like module, containing a single row of contacts. Typically, two such contact modules will be combined with one or more functional modules, arranged between the contact modules in order to constitute a complete telecommunications module. Furthermore, the contact modules can be combined with side walls of a different height so as to allow the formation of the basis of the telecommunications module with different heights. In this manner, the "base" of the telecommunications module can be adapted to accommodate different types of functional modules. Moreover, two or more contact modules, which can have a single row of contacts or tow opposing rows of contacts can be arranged side by side. Such an arrangement of plural contact modules can be combined with one or more functional modules in order to form a completed telecommunications module.

As mentioned, one or more functional modules having two or more first and second contacts, can be combined with one or more contact modules in order to complete a telecommunications module. The number of the first and second contacts of a single functional module in the telecommunications module, can also be equal to the number of the first and second contacts of the contact modules, which are present. In other words, a single functional module can be provided to form the "central unit" of the telecommunications module. In this case, the single functional module can be combined with one or more contact modules. As a non limiting example, the functional module can have twenty first contacts and twenty second contacts.

The contact module can comprise wire guides. These can be formed on a top and/or bottom face thereof. As regards the wire guides, reference is made to PCT/EP 03/00461 of the applicant, in which various types and structures of wire guides are described.

In the telecommunications module, the contacts of the functional module can be in direct connection with the contacts of the contact module. In other words, those metal pieces, which constitute the contacts of the contact module, are in physical contact with the contacts of the functional module.

As an alternative, the contact module can comprise at least one printed circuit board with which the contacts of the contact module are suitably connected. The printed circuit board can have a plug or a socket, and the functional module can have a complimentary socket or plug. This allows to establish the connection between the functional module and the contact module.

The contact module can be provided as a combination of, firstly, a contact section and, secondly, a housing section. The contact section contains the contacts of the contact module. The housing section can be formed as a box, to which both the one or more contact sections and/or one or more functional modules can be fitted. Furthermore, the housing section can include wire guides. The above-described feature further provides economic advantages in that the housing section can be installed at first. In a further step, the one or more contact sections can be fitted to the housing section in order to delay those costs, which are related with the contact sections.

The contacts of the functional module and the contacts of the contact module can be adapted to engage with each other. Thus, the contacts provide both an electrical connection and a mechanical connection. This mechanical connection provided by the contacts can be, but does not have to be, combined with the above-described mechanical connection provided by the mechanical connection means provided on the housing of the functional module and/or the contact module.

As outlined-above, the functional module allows additional components to be accommodated in a telecommunications module comprising the functional module. This can particularly be used in an assembly of two or more telecommunication modules as described-above.

In such an assembly, the telecommunications modules can be connected with each other, particularly by a bus. Such a bus can, e.g. be a test bus which selectively connects a selected one of the telecommunications modules with a remote test device. In this context, reference is made to the International Patent Application of the applicant which was filed corresponding to German utility model 202 03 911.

As regards the connection, particularly the bus between plural telecommunications modules, this can be established by means of a printed circuit board. The printed circuit board can be arranged along the back faces of the telecommunications modules and can be suitably electrically connected with the functional modules and/or the contact modules of the telecommunication modules.

Furthermore, a flat cable can be used to connect plural telecommunication modules of the described assembly with each other.

A control module can be provided in the described assembly, which is connected with each telecommunications modules. The control module can, e.g. be provided in order to control the "regular" function of the functional module. Furthermore, the control module can be used to control the test access to a selected one of the telecommunications modules.

The invention, furthermore, advantageously provides a kit of parts comprising at least two functional modules as described above, which are of a type different from each other, and at least one contact module. Thus, a modular system for creating a telecommunications module is provided. In particular, a contact module can be combined with a functional module of that type, which is needed in the specific situation. In particular, functional modules can be replaced in accordance with the specific needs. In this context, the telecommunications module does advantageously not have to be taken apart. Rather, the "base", i.e. the one or more contact modules, of the telecommunications module, except for the functional module, can remain unchanged. Particularly, the wires may remain connected, and the functional module can be replaced by a different one.

The invention also provides a method of installing a telecommunications module, in which, firstly, at least one contact module, essentially as described-above, is installed. In a second step, one or more functional modules as described-above are fitted to the one or more contact modules in order to establish the electrical connections. As indicated before, this method is cost saving and thus attractive for the installation of an assembly of one or more telecommunications modules, in particular the installation of a distribution point in the field of telecommunications. In particular, the comparably inexpensive contact modules can be installed in a first step without the need of high investments. One can than wait with the completion of the telecommunications module until the complete telecommunications module is actually needed. Furthermore, a basic, inexpensive telecommunications module can be installed for a first period of time. E.g., a connection module can be installed at first. In a second step, one or more functional modules can be fitted to the contact modules in order to complete the telecommunications module. In particular, the telecommunications module can be provided with further functions, which should be performed. E.g. a splitter module can be established. Moreover, when a connection module was established at first, this module can be changed to a splitter module in a second step. As an alternative, any other type of telecommunications module, which is capable of performing certain functions, can be established by fitting one or more suitable functional modules to the one or more contact modules. In this context, wires can be connected with the one or more contact modules before fitting the functional module to the contact modules. In this manner, any connection work including the installation of the one or more contact modules can be done in the first step. The second step, namely the completion of the telecommunications module by fitting the functional module to the contact module, can be conducted quickly and easily, as the wires, which are already connected with the contact modules, can stay in place.

### BRIEF DESCRIPTION OF THE DRAWINGS

Hereinafter, the invention will be described by means of several non-limiting examples thereof with reference to the drawings, in which:
Fig. 1 shows in an exploded, perspective and partially cut away view the structure of a telecommunications module;
Fig. 2 shows in a perspective view the completed telecommunications module of Fig. 1;
Fig. 3 shows a second embodiment of the telecommunications module, similar to the embodiment of Fig. 1 and 2;
Fig. 4 shows details of the functional module and the contact module of the telecommunications module;
Fig. 5 shows a perspective view of the contacts of the telecommunications module;
Fig. 6 shows a perspective view of an assembly of plural telecommunications modules;
Fig. 7 shows an exploded perspective view of a third embodiment of the telecommunications module;
Fig. 8 shows a perspective cut-away view of the embodiment of Fig. 7 in the completed state.

### DESCRIPTION OF PREFERRED EMBODIMENTS OF THE INVENTION

The telecommunications module 10, shown in Fig. 1, generally consists of a contact module 12, of which only a part is shown, and a functional module 14. The contact module 12 acts as the "base" for the telecommunications module 10. In the depicted case, the contact module 12 has, at its front face, a row of contacts 16, which are adapted to allow the connection of wires therewith. These contacts can, in their exposed section, be formed as IDCs (insulation displacement contacts). However, as will be detailed below, pins, which are configured as wire wrap pins, so as to allow a wire to be wrapped around, are conceivable. As can be seen on the first side face, which is the left side face 18 in Fig. 1, a number of wire guides are provided in the top and/or bottom face of the contact module. In the case shown, the wire guides extend from the left side face 18 in a substantially arc-shaped path to the contacts 16 at the front face. In particular, the most forward wire guide 20 will usually extend to the contact furthest to the left, whereas the most backwards wire guide 22 will typically extend to the contact which is furthest to the right side. In the case shown, the wire guides are closed at that face, which is not visible in Fig. 1.

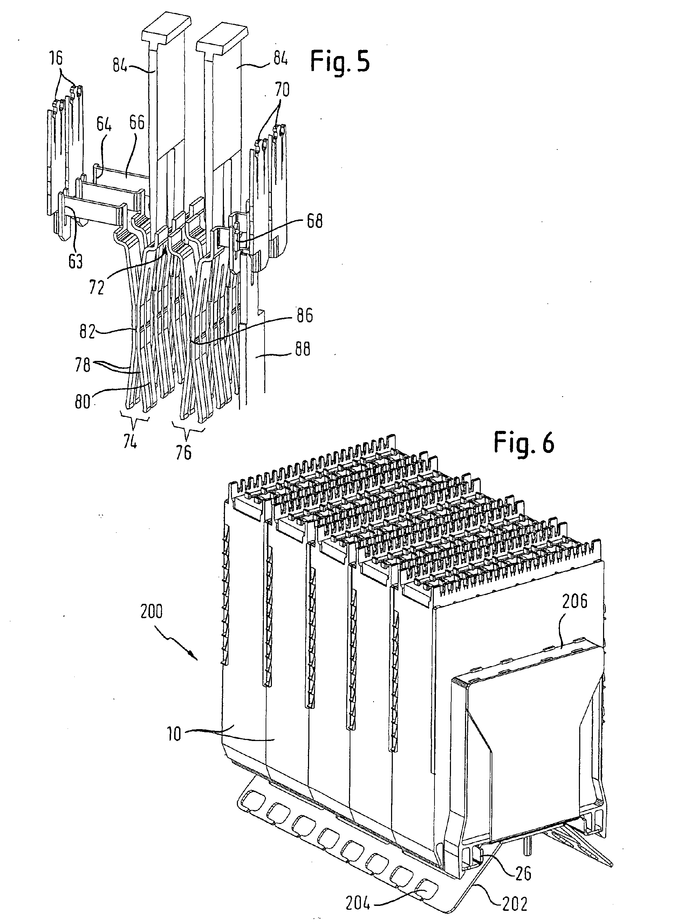

In a rear area, the contact module comprises latch hooks 24, which are adapted to mount the contact module 12 to a substantially hat-shaped back mount frame 26. The back mount frame 26 will usually be made of metal and will typically be adapted to accommodate a number of telecommunications modules 10 so as to constitute a block of telecommunications modules (see Fig. 6). In the case shown, the contact module comprises a grounding plate 28, which is in electrical contact with the back mount frame 26. In the embodiment shown, this is realized by contact fingers 30. An electrical connection can be realized in the vicinity of the back mount frame 26, in order to connect plural telecommunications modules with each other and/or with an optional control module. In the case shown in Fig. 1, this electrical connection is realized by means of a flat cable 32, which is provided with a connector 34. Although this is not shown, additional connectors can be provided in order to realize the described connection with further modules. As will be apparent to those skilled in the art, the flat cable 32 constitutes a bus, which can be connected with plural telecommunications modules. In particular, a connector complimentary to the connector 34 can be provided in the contact module 12 and/or the functional module 14, in order to establish the desired electrical connections.

In the case shown, the contact module 12 comprises notches with a widened entrance area 36 formed in a front part of the module. These are, as will be described in more detail below, intended to establish mechanical connection with the functional module 14. Furthermore, the shown embodiment works such that contacts projecting from the functional module 14 can be inserted into the notches 36 in order to connect the contacts of the functional module 14 with those of the contact module 12. This will also become apparent from the explanation below.

It should be noticed, that only one half of the contact module 12 is shown in Fig. 1. Basically, a mirror image of the part of the contact module 12 shown in Fig. 1 is provided at a position between the part shown in the drawing and the viewer. The notches of the part, which is not shown in the drawing, face the notches 36 of the part, which is visible in Fig. 1. This allows, when the functional module 14 is inserted into the completed contact modular 12, the mechanical interaction between these notches (not shown) and hooks 38, which are provided projecting from the functional module 14. As regards the contact module 12, it should be noted that its housing, which preferably comprises, inter alia, the left side wall 18, the right side wall 40, the latch hooks 24 at the back, the wire guides 20, 22, the portion, in which the notches are formed and the surroundings of the contact 16, is formed of electrically isolating material, particularly plastic. Naturally, the contacts 16 are made of metal. This also applies to the grounding plate 28.

As regards the contact module 12, it should generally be mentioned that this can have any types of contacts. In particular, different types of IDCs can be provided in the contact module 12. E. g. contacts which are known as SID contacts, ID 3000-contacts, offered by the applicant or LSA+-contacts can be incorporated into the contact module 12. In this manner, comparably inexpensive contact modules can be provided with a specific type of contacts in accordance with the needs and/or the telephone company's preference. Furthermore, the front part of the contact module 12 can be adapted to the type of contacts incorporated therein. In this manner, it is possible to allow the use of specialised tools in order to connect wires by means of a specific type of contact with the contact module 12.

The functional module 14 is generally constituted by a printed circuit board 42, a lower housing 44 and an upper housing 46. It should be noted that the printed circuit board 42 as such and/or the lower housing 44 can be identical for any type of functional module. However, the upper housing 46 can, with regard to its height h, be adapted to the height of the components 48, which are present on the printed circuit board. Thus, the components 48 can be different depending on the type of functional module. In other words, it is conceivable that the printed circuit board 42 carries different components 48 than those shown in the drawings. These might be of a smaller or greater height, so that the height of the functional module 14 as a whole can be adjusted. For this purpose, merely a different upper housing 46 has to be used. Furthermore, the contacts of the functional module will, as described in more detail below, be adjusted in a appropriate manner. However, any remaining components of the functional module can remain unchanged, which leads to economic advantages.

As regards the electrical components 48 as well as the electrical connections (not shown) on the printed circuit board 42, these can be of any type which is required for the specific purpose. E.g., these components can form splitter circuits or protection components, which are responsive to overcurrent or overvoltage occurring in the contacts of the functional module. The printed circuit board, is in the case shown by plural fork contacts (not shown) connected with the contacts of the functional module, which are accommodated in the lower 44 and upper housing 46. In the shown embodiment, the printed circuit board 42 is, in its rear part, provided with two slit-like recesses 92 which form a tab 90. The tab 90 can be adapted to be insertable into and connected with the connector 34. In this manner, an electrical connection between the functional module 14 and the flat cable 32 can be established. By means of this connection, the functional module 14 can be connected with further functional modules and/or an optional control module.

As can be seen at the very top of Fig. 1, an additional protection plug 50 can be inserted into one or more suitable openings 52 provided in the front face of the functional module 14. As will be apparent to those skilled in the art, tapping contacts of the protection plug 50 can be electrically connected with the contacts of the functional module, in a manner to provide protection for those devices, which are connected with the functional module via wires attached to the contact module, with which the functional module is combined. It is to be noted, that the functional module 14 can, as shown in Fig. 1, be removed from the contact module 12 with any protection or other plugs 50, remaining attached to the functional module 14.

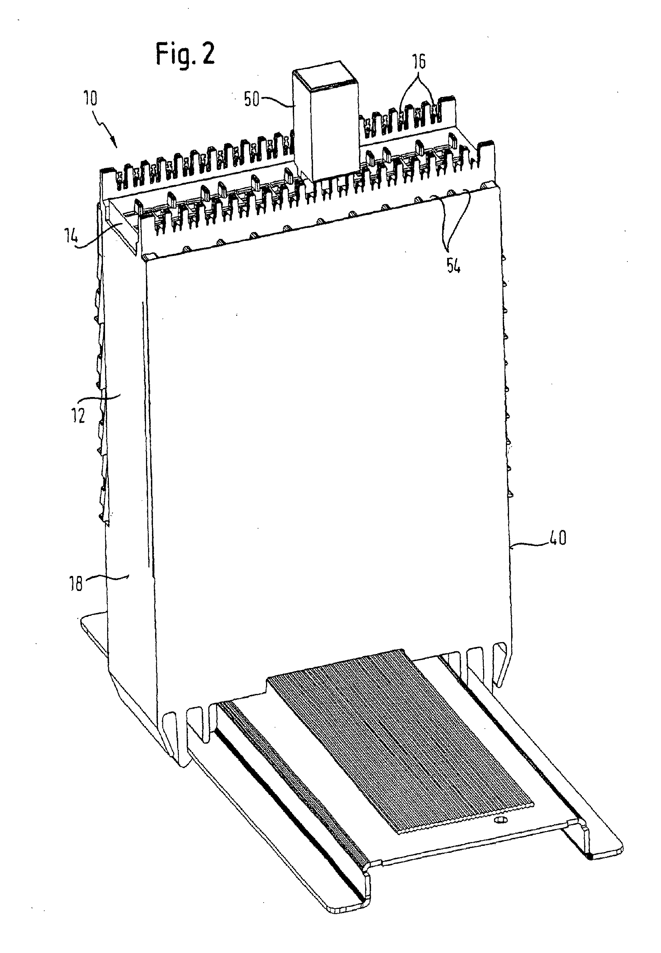

In Fig. 2, the complete telecommunications module 10 is shown. The contact module 12, of which only one half is shown in Fig. 1, is complete and presents a box like structure with a comparably large central cavity, into which the functional module 14 is inserted. In particular, as shown in the drawing, the functional module 14 can be adapted to be inserted so far that the front face of the functional module is at a level behind the contacts 16 of the contact module 12. This prevents any interference between wires or cables, which are connected with the contacts 16, and the functional module as such as well as any plugs 50 or similar objects attached to the functional module 14. As can be taken from Fig. 2, the embodiment shown comprises wire guides also on that side, which is directed to the viewer. In particular, openings 54 are formed in a forward area of the contact module 12. The row of openings 54 is substantially parallel to the row of contacts 16, so that each contact 16 has an opening 54 of a wire guide associated therewith. This is described in greater detail above with reference to Fig. 1.

This insures that wires inserted from the left 18 or right side face 40 through the wire guides, will be guided to a particular contact 16 or a pair of contacts. In particular, this connection work of guiding plural wires with the wire guide to the contacts of the contact module 12, can be performed without the presence of the functional module 14. This allows the telephone provider to prepare telecommunication lines with comparably low costs, as only the contact module has to be provided. At a later point in time, when the complete connection is to be established, and when it is clear which functions the telecommunications module should perform, a suitable functional module 14 can be inserted into the contact module to complete the telecommunications module 10.

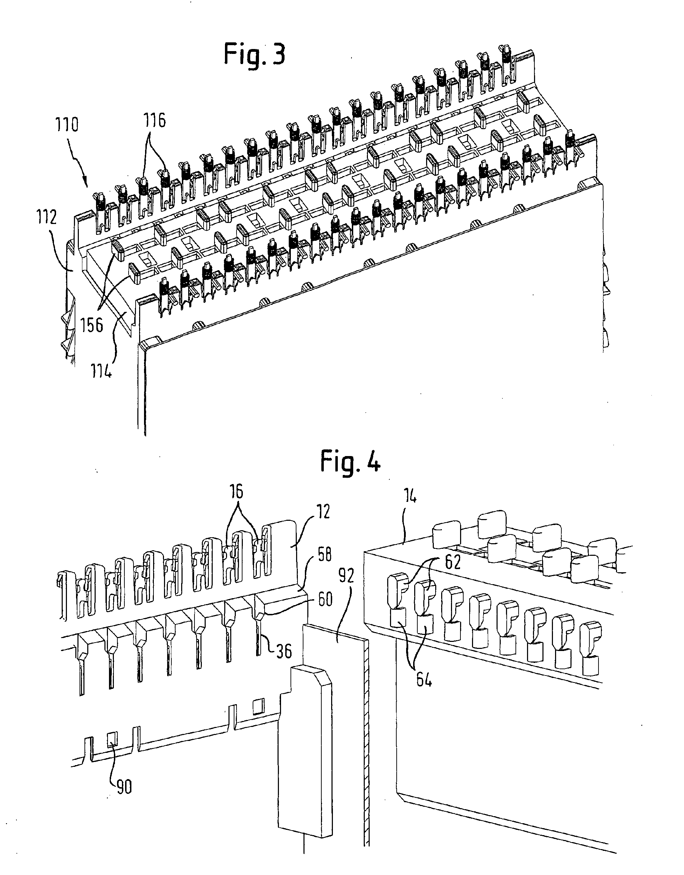

Fig. 3 shows the front part of an alternative embodiment of the telecommunications module 10. The telecommunications module 110 shown in the drawing, differs from the one previously described in that the contacts 116 of the contact module 112 are formed as wire wrap pins. Around these the exposed ends of wires can be wrapped in order to establish electrical connection. It is noted in connection with the embodiment of Fig. 3, that the functional module 114 can comprise projecting webs or ridges 156, which can be used for providing coding information with regard to an associated electrical connection provided in the functional module 114.

Fig. 4 shows details of the electrical and mechanical connection between the contact module 12 and the functional module 14. As mentioned in connection with Fig. 1, the functional module 12 comprises, at a location behind the contacts 16, a widened area 58 comprising plural notches 36, each with a widened entrance area 60. In these notches 36 a portion of each contact 16 is accessible. When the functional module 14 is to be connected with the contact module 12, it is inserted in a manner to bring a number of hooks 62 which are facing away from the front face, into engagement with notches 36. In this connection, the contacts 64 of the functional module 14, which project there from, are inserted into the notches 36. They are then, as will be apparent from Fig. 5, electrically connected with the contacts of the contact module 12. In the shown embodiment, the projecting parts of the contacts are hook-shaped in a horizontal direction. In the case shown, both the hooks 62 of the mechanical connection means and the contacts 64 comprise, firstly, a straight part and, secondly, a bent part with a free end. In the shown embodiment, the straight parts are aligned in a manner to allow the insertion of both the hook 62 and the contact 64 into a single notch 36. The straight part of the contact 64 will be accommodated in the notch 36 as such. The straight part of the hook 62 will, in the depicted case, be accommodated in the widened entrance area 60. In the lower left-hand part of Fig. 4, connection means 90 are shown, which are intended to establish connection between a contact section shown in the left part of Fig. 4 and a housing section. The housing section can include the wire guides visible in Fig. 1, 2, 3. Apart from the wire guides, the housing section can be configured as a comparably simple box like housing. This "base" of a contact module can be combined with the contact section shown in Fig. 4 by interlocking the connection means 90, in particular the openings thereof with suitable protection (not shown), which can be formed on the housing section. The side wall 92 can be integrally connected with the contact section (not shown). As an alternative, the side wall 92 could be a part of the housing section as shown.

The contacts of the contact module and the functional module are also apparent from Fig. 5, which shows the combination of two pairs of contacts of the contact module with two pairs of contacts of the functional module. Firstly, the contacts 16 of the contact module are, in their rear part, provided with a slit 63, into which the projecting part 64 of the contacts of the functional module can be inserted. In this context, the slit 63 can be formed like a slit of an IDC. In this manner, the legs, which define the slit between them, take up any forces which are generated by the insertion of the contact 64. In particular, it can thus be avoided that these forces are transmitted to the housing. The sections of the contacts 16 which are provided with the slit 63 are arranged in the vicinity of the notches 36 formed in the housing of the contact module (Fig. 2) so as to ensure the proper insertion of the projecting portions 64 into the slits 63. It was mentioned above that it is possible to provide functional modules with different widths. In this context, the length of the contact arm 66, on which the projecting part 64 is provided, can be adjusted so as to ensure the necessary projection of the part 64 from the functional module. In particular, the contact arm 66 can be shorter or longer than shown in Fig. 5, when a contact module with a reduced or enlarged height is to be provided.

The contacts of the functional module as a whole are formed between the projecting part 64 and a further projecting part 68 provided at the opposite side. The connection of this last mentioned part 68 with the other, second contact 70 of the contact module is substantially identical to that, which was described with reference to the projecting part 64 and the slit 63. The contacts within the functional module are formed as two disconnection contacts. As becomes apparent from the gap 72, the separation contacts 74 and 76 are separated from each other. Furthermore, each separation contact 74, 76 is formed by two tabs 78, which are, in the case shown, provided with a slit 80. These tabs 78 approach each other towards the centre thereof and form an electrical connection at the contact point 82, which is preferably accessible from the outside of the functional module. In particular, a disconnection plug 84, which is schematically shown in Fig. 5, can be inserted, in order to disconnect the electrical connection. This can for example be done, when a line, which runs through the mentioned contacts, is to be tested.

The electrical path runs from the outer tap via the contact point 82 to the inner tab 78. Each of the inner tabs is suitably connected with the printed circuit board (see Fig. 1), e.g. by means of a forked contact embracing the end of the tab 78. By means of electrical connections of the printed circuit board and of the arrangement of electrical components there between, the signal is transmitted between the left disconnection contact 74 and the right disconnection contact 76. Also, the contact point 86 of the right disconnection contact can be accessed from the outside of the functional module, which is indicated in Fig. 5 by means of a further plug 84. It should be noticed, that either plug 84 can be a disconnection plug, or a protection plug, which can tap the contacts of the functional module so as to connect these with protection components. Furthermore, the plugs 84 can be formed as test plugs.

As regards the disconnection contacts 74 and 76, it should be mentioned that these are not necessarily, required. Rather, the contacts of the functional module can comprise a single tap, similar to the tabs 78 shown, so as to provide connection with the interior of the functional module, particularly a printed circuit board thereof. However, there might also be situations, in which the projecting part 64 and the opposite projecting part 86 of the functional module are directly connected with each other so as to provide.a functional module, which electrically connects associated contacts of the contact module with each other, without providing any further functions.

Fig. 5 shows a situation, in which one of the second contacts 70 of the contact module, namely, the left contact 70 is used as a grounding contact. This can be taken from the fact that a contact finger 88 of the grounding plate 28 (Fig. 1) is connected therewith. Therefore, the electrical connections within the functional module will be such that the grounding contact of any protection components will, by means of suitable connections, eventually be connected with the contact finger 88 of the grounding plate 28. This will allow overvoltage to be guided to ground. Furthermore, any shielding wires of twisted wire pairs, which might be attached to the contacts of the contact module, and in which shielding wires voltage is induced, can be connected with the contact 70, which is connected with the grounding contact finger 88.

Fig. 6 shows an assembly 200 of, in the depicted case, five telecommunications modules 10. The contact modules 10 are mounted to the back mount frame 26 (see also Fig. 1), which is in turn attached to a carrier 202. Openings 204 can be provided in the carrier in order to allow the insertion and guiding of wires which are connected with the telecommunications modules 10. As shown in the front part of Fig. 6, a control module 206 can be provided in the assembly 200. This control module 206 will typically be connected with the telecommunications modules 10 and will be adapted to control any functions, which can be performed by means of the electrical connection between the control module 206 and the telecommunications modules 10. E.g., testing and monitoring of the telecommunications modules 10 and/or specific electrical connections thereof, can be controlled by the control module 206.

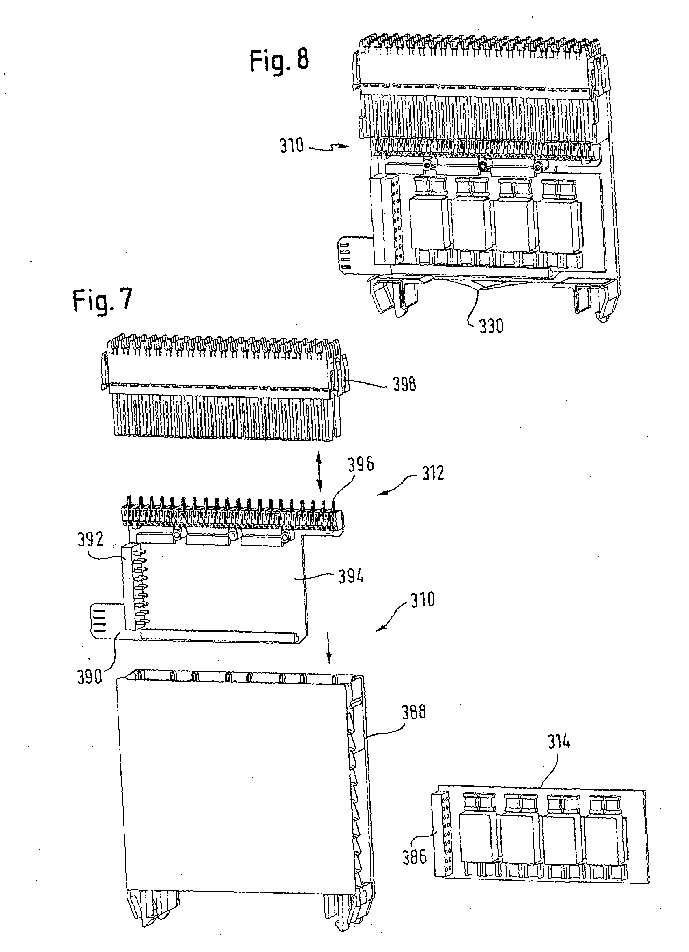

In Fig. 7 a third embodiment of a telecommunications module 310 is shown in an exploded perspective view. The telecommunications module 310 is constituted by a contact module 312, which in turn includes a terminal strip 398. The terminal strip 398 contains the contacts of the contact module. These are, in the depicted case, by means of a plurality of fork contacts 396, connected with a printed circuit board 394 of the contact module. The printed circuit board 394 comprises a suitable connector 392 for the connection with the functional module, as described below. The printed circuit board 394 further comprises a tab 390 which is intended to allow electrical connection with adjacent telecommunications modules and/or a control module by means of attaching a suitable connector thereto. The terminal strip 398 and the printed circuit board 394 are accommodated in a box-like housing 388, which substantially corresponds to the housing of the contact module of the previous embodiments and has wire guides, in the case shown. In a similar manner as the embodiments described above, the contact module merely constitutes the basis of a telecommunications module. The functional module 314 can be inserted at a point in time, when the telecommunications module is to be completed. In the case of the embodiment of Fig. 7, the functional module 314 is inserted from the side rather than the front. A connector 386 is provided so as to establish connection with the connector 392 of the contact module.

Fig. 8 shows the complete telecommunications module 310 with a part of the housing 388 being removed in order to show the interior of the telecommunications module. At the rear area of the telecommunications module, a contact section 330 of a ground plate is indicated, which is adapted to establish electrical connection with a back mount frame, similar to that shown in Fig. 1.

## Claims

1. A functional module (14, 114, 314) in the field of telecommunications having a front, a rear and four side faces, more than two first contacts (64, 66, 74), and more than two second contacts (76, 68), each first contact (64, 66, 74) being connected with at least one second contact (76, 68) the contacts (64, 68) being adapted to be connected with first (16) and second contacts (70) of at least one contact module (12, 112, 312), which further includes contacts adapted to connect wires therewith, and into which contact module (12, 112, 312) the functional module (14, 114, 314) is fittable so as to establish electrical connection between the first (64) and second contacts (68) of the functional module (14, 114, 314) and the first (16) and second contacts (70) of the contact module (12, 212, 312).

2. The functional module in accordance with claim 1 wherein the first contacts (64, 66, 74) are arranged on a first side face of the functional module (14, 114, 314), and the second contacts (76, 68) are arranged on a second side face opposite the first side face.

3. The functional module in accordance with claim 1 or 2 wherein the contacts (64, 68) extend outside a housing of the functional module (14, 114, 314).

4. The functional module in accordance with any of the preceding claims, further including mechanical connection means (62) for providing a mechanical connection with the contact module (12, 112, 312).

5. The functional module in accordance with claim 4 wherein the mechanical connection-means (62) are hook-shaped.

6. The functional module in accordance with any of the preceding claims wherein the contacts (64, 68) are hook-shaped.

7. The functional module in accordance with claims 5 and 6 wherein the hooks of the mechanical connection means (62) and the hooks of the contacts (64, 68) extend in a mutually different direction.

8. The functional module in accordance with claim 7 wherein straight parts, from which the hooks of the mechanical connection (62) and the hooks of the contact element (64, 66) extend, are substantially aligned with each other.

9. The functional module in accordance with any of the preceding claims further including at least one filter.

10. The functional module in accordance with any of the preceding claims further including at least one splitter circuit.

11. The functional module in accordance with any of the preceding claims further including at least one test access.

12. The functional module in accordance with any of the preceding claims further including at least one protection component.

13. The functional module in accordance with any of the preceding claims further including at least one printed circuit board (42).

14. The functional module in accordance with any of the preceding claims further at least one opening (52) for the insertion of at least one plug (50, 84) or module such as a protection, test or disconnection plug or module.

15. The functional module in accordance with claim 14 wherein the opening (52) is formed in a front face of the functional module (14, 114, 314).

16. The functional module in accordance with any of the preceding claims further including an upper housing (46) and a lower housing (44).

17. A telecommunications module (10, 110, 310) comprising at least one functional module (14, 114 314) in accordance with any of the preceding claims and at least one contact module (12, 112, 312).

18. The telecommunications module in accordance with claim 17 wherein the number of first and second contacts of the one or more functional modules is equal to the number of first and second contacts of the one or more contact modules.

19. The telecommunications module in accordance with claims 17 or 18 wherein wire guides (20, 22) are provided in the contact module (12, 112, 312).

20. The telecommunications module in accordance with any of claims 17 to 19 wherein the contacts of the functional module (14, 114, 314) and the contacts of the contact module (12, 112, 312) are in direct connection with each other.

21. The telecommunications module in accordance with any of claims 17 to 20 wherein the contact module (312) comprises a printed circuit board (394) with a connector (392) for connecting with the functional module (314).

22. The telecommunications module in accordance with any of claims 17 to 21 wherein the contact module (12) includes a contact section containing the contacts of the contact module (12) and a housing section.

23. The telecommunications module in accordance with any of claims 17 to 22 wherein the contacts (16, 70) of the contact module (12) and the contacts (64, 68) of the functional module (14) engage with each other.

24. An assembly (200) of two or more telecommunications modules (10) in accordance with any of claims 17 to 23.

25. The assembly in accordance with claim 24, wherein the telecommunications modules (10) are connected by means of a bus.

26. The assembly of claim 24 or 25, wherein the bus is formed on a printed circuit board.

27. The assembly in accordance with claim 26 wherein the bus is formed by means of a flat cable (32).

28. The assembly in accordance with any of claims 24 to 27 further including a control module (206), which is connected with one or more telecommunications modules (10) .

29. A kit of parts comprising at least two functional modules (14, 114, 314) in accordance with any of claims 1 to 16 of a different type and at least one contact module (12, 112, 312).

30. A method of installing a telecommunications module including the steps of:
- firstly, installing at least one contact module, which includes contacts adapted to connect wires therewith, and to which a functional module in accordance with any of claims 1 to 16 is fittable, and
- secondly, fitting at least one functional module in accordance with any of claims 1 to 16 to the at least one contact module so as to establish electrical connection between the contacts of the functional module and the contacts of the contact module.

31. The method in accordance with claim 30 wherein wires are connected with the contacts of the contact module before fitting the functional module to the contact module.
